# EUROPÄISCHE PATENTSCHRIFT

(11) **EP 2 775 231 B1**
(45) Veröffentlichungstag und Bekanntmachung des Hinweises auf die Patenterteilung: **15.10.2014**
(21) Anmeldenummer: 13158151.4
(22) Anmeldetag: 07.03.2013
(51) Int. Cl.: F24J 2/52

(54) **Montagebügel**
Mounting bracket
Etrier de montage

(43) Veröffentlichungstag der Anmeldung: 10.09.2014
(73) Patentinhaber: Federnfabrik Schmid AG, 8618 Oetwil Am See (CH)
(72) Erfinder: Rüegg, Fritz, 9100 Herisau (CH)
(74) Vertreter: Alber, Norbert

(56) Entgegenhaltungen:
- AT-B- 381 342
- DE-U1- 9 310 063
- DE-U1-202009 013 596

## Beschreibung

### I. Anwendungsgebiet

Die Erfindung betrifft Montagebügel, wie sie benutzt werden, um flächige Elemente auf einem Traggestell zu montieren.

### II. Technischer Hintergrund

Im konkreten Fall sollen mit Hilfe solcher Montagebügel z.B. Photovoltaik-Module auf einem Traggestell fixiert werden, indem jedes Modul von beispielsweise vier solchen Montagebügeln gehalten wird.

Zu diesem Zweck hat jeder Montagebügel in seinem Haltebereich eine U-förmige Haltekröpfung, in welcher der Rand des Moduls gehalten wird.

Der Montagebügel soll auch quer zur Hauptebene der Photovoltaik-Module federn können, um z.B. bei heftigem Wind ein geringfügiges Abheben des Moduls vom Traggestell zuzulassen, ohne dass der Montagebügel bricht und ohne dass die Belastung auf das Modul zu groß wird.

Zu diesem Zweck sind bereits aus einem einzigen Stück eines Flachmaterials bestehende, im Mittelbereich doppelt gekröpfte, Biegeteile bekannt, die im einen Endbereich, dem Verschraubungsbereich, zur Verschraubung auf der Tragekonstruktion, vorgesehen sind und im anderen Bereich, dem Haltebereich, die U-förmige Kröpfung für das Umfassen des Randes des Solarpaneels aufweisen.

Bei Herstellung aus einem einfachen Flachmaterial bedeutet dies jedoch, dass der Montagebügel über seine gesamte Länge überall die gleiche Dicke und damit etwa die gleiche Steifigkeit besitzt, was nicht wünschenswert ist.

Weiterhin ist es bereits bekannt, solche Montagebügel aus zwei übereinanderliegenden Teilen herzustellen, einem Haltebügel mit der Haltekröpfung und einem Verstärkungsbügel, um die vor allem im Verschraubungsbereich gewünschte Verstärkung der Biegesteifigkeit des Montagebügels zu erzielen, die sich jedoch nicht über den gesamten Haltebereich erstrecken soll.

Dabei entsteht das Problem, dass die beiden Teile vor der Verschraubung an der Tragekonstruktion unverlierbar aneinander gehalten werden müssen, um den Transport und die Montage zu erleichtern.

Dies wurde bisher beispielsweise durch Verkleben gelöst, was jedoch zum einen relativ aufwendig ist, und zum anderen bei einer nicht ausreichenden Fluchtung der Verschraubungsbohrungen in den beiden Teilen des Montagebügels zueinander keine nachträgliche Korrektur mehr zulässt.

Es ist ferner bekannt, einen solchen Montagebügel wiederum einstückig aus Flachmaterial herzustellen, jedoch an einem Ende so stark umzubiegen, dass ein Aufdoppeln der Materiallage über den gewünschten Bereich erfolgt, vorzugsweise den Verschraubungsbereich.

Dabei ist jedoch - abhängig vom gewünschten Material - gerade die dafür notwendige Kröpfung um **180°** sehr kritisch, da sie zu einem unerwünschten Brechen des Materials führen kann.

Darüber hinaus ist der Längenbedarf in Verlaufsrichtung des Montagebügels durch diese **180°**-Kröpfung vergrößert, und ebenso der Materialverbrauch, was bei der üblichen Verwendung von Edelstahl durchaus eine Rolle spielt.

Für diesen Zweck besitzen die Montagebügel zunächst eine doppelte, gegenläufige Kröpfung, die den Verschraubungsbereich zur Verschraubung am Traggestell von dem Haltebereich, mit dem der zu haltende Gegenstand, etwa das Fotovoltaik-Modul, gehalten wird, voneinander trennt und in der Höhe zueinander versetzt.

Im Haltebereich ist für die Haltefunktion am freien Ende eine C-förmige Kröpfung vorhanden, die formschlüssig um den Rand des zu haltenden plattenförmigen Gegenstandes - im Folgenden nur noch als Modul bezeichnet, ohne die Erfindung darauf zu beschränken - herumgreifen soll.

Im Verschraubungsbereich sind in Verlaufsrichtung des Montagebügels beabstandet in der Regel zwei Verschraubungsbohrungen vorhanden, durch die hindurch die Verschraubung des Montagebügels gegenüber dem Traggestell erfolgt. Durch den Höhenversatz, bedingt durch die doppelte Kröpfung, wird dabei Platz geschaffen für die Höhe des Schraubenkopfes.

Das Problem ist, dass die Montagebügel für diesen Zweck nicht vollkommen starr sein dürfen, sondern der Haltebereich quer zur Verlaufsrichtung, also in der Höhe des Montagebügels, nachgiebig sein muss für den Fall, dass starke, meist windbedingte, Kräfte auf das Modul wirken und dieses kurzzeitig von dem Traggestell wegziehen. Würde in diesem Fall der Montagebügel vollständig starr ausgebildet sein, so könnte dies unter Umständen zum Bruch des Moduls führen.

Um diese Elastizität im Haltebereich und dennoch eine ausreichende Steifigkeit im Verschraubungsbereich zu erreichen, trotz einfacher Herstellung des Montagebügels, ist es bereits bekannt, den Montagebügel aus zwei Teilen zusammenzusetzten, nämlich einem Haltebügel, der auch die C-förmige Kröpfung im Haltebereich aufweist, sowie einem darauf aufliegendem Verstärkungsbügel, der im Haltebereich zurückversetzt von der C-förmigen Ausbildung des Haltebügels frei auslaufend und ohne Kröpfung in diesem Bereich endet.

Dadurch können sowohl Haltebügel als auch Verstärkungsbügel aus einem einfachen Flachmaterial jeweils gleichbleibender Dicke hergestellt werden, und insbesondere sogar aus dem gleichen Material, beispielsweise einem Edelstahlband.

Damit für die Verschraubung der Montagebügel auf dem Traggestell keine zwei separaten Teile eines Montagebügels umständlich gehandhabt werden müssen, ist es bereits bekannt, Haltebügel und Montagebügel bei der Herstellung miteinander zu verkleben, um einen einstückigen, leicht handhabbaren Montagebügel zu schaffen.

Allerdings ist das Verkleben zum einen zeitaufwendig und meist durch Handarbeit zu erledigen, und des Weiteren wird beim Verkleben durch die unterschiedliche Dicke der Kleberschicht vor allem im Haltebereich ein unterschiedlicher Abstand zwischen Haltebügel und Verstärkungsbügel bewirkt, der die Elastizität des gesamten Montagebügels im Haltebereich stark beeinflusst, sodass die so entstehenden Haltebügel hinsichtlich dieser Eigenschaft nicht identisch sind, sondern eine relativ große Streuung aufweisen.

In diesem Zusammenhang ist es aus der DE 9310063 U1 bereits bekannt, einen Montagebügel bestehend aus Haltebügel und Verstärkungsbügel zu verwenden, der eine analog doppelt-gegenläufige Kröpfung aufweist und so aufeinander liegen, dass die in beiden Bügeln vorhandene wenigstens eine Verschraubungsbohrung in beiden Bügeln zueinander fluchtet.

Haltebügel und Verstärkungsbügel liegen jedoch nicht kontaktierend aneinander an, sondern dazwischen muss gerade das Rahmenprofil des zu fixierenden Gegenstandes aufgenommen werden, was bei der Montage eine umständliche Handhabung von Haltebügel und Verstärkungsbügel einzeln erfordert und die Montage unnötig erschwert.

Haltebügel und Verstärkungsbügel bilden dort also keine mittels Formschluss-Verbindung hergestellte, nur zusammen handhabbare, Einheit.

Aus der AT 381342 B sind implizit Verfahrensmerkmale zum Herstellen eines Montagebügels bekannt, die u.a. das Ablängen, Ausstanzen von Bohrungen etc. umfassen.

### III. Darstellung der Erfindung

### a) Technische Aufgabe

Es ist daher die Aufgabe gemäß der Erfindung, einen Montagebügel zu schaffen, der einfach und kostengünstig herzustellen ist und definierte elastische Eigenschaften im Haltebereich bei möglichst geringer Streuung aufweist.

### b) Lösung der Aufgabe

Diese Aufgabe wird durch die Merkmale der Ansprüche **1** und **12** gelöst. Vorteilhafte Ausführungsformen ergeben sich aus den Unteransprüchen.

Durch die Fomschlussverbindung zwischen Haltebügel und Verstärkungsbügel wird wiederum, wie gewünscht, eine einheitliche, leicht handhabbare Einheit eines Montagebügels geschaffen, ohne die Nachteile einer Verklebung der beiden Bügel aufzuweisen:
Durch die Formschlussverbindung liegen die beiden Bügel zunächst einmal ohne jede Zwischenlage, wie etwa eine Kleberschicht, direkt aufeinander, sodass bereits das Problem des unterschiedlichen Abstandes zwischen den beiden Bügeln im Haltebereich nicht mehr existiert.

Des Weiteren kann die Formschlussverbindung maschinell durchgeführt werden, und erfolgt damit wesentlich schneller und kostengünstiger als eine Verklebung.

Darüber hinaus kann durch Wahl der Toleranzen hinsichtlich vor allem der Formschlusselemente die Ausrichtung der beiden Bügel zueinander vor dem Verbinden sehr genau festgelegt werden, und dadurch vor allem die elastischen Eigenschaften des fertigen Montagebügels im Haltebereich sehr genau gesteuert werden.

Vorzugsweise umfasst die Formschlussverbindung dabei Biegelaschen, die in einem der Bügel, vorzugsweise im Haltebügel, angeordnet sind, und sich im zusammengebauten Zustand des Montagebügels in Aussparungen des Verstärkungsbügels hinein erstrecken. In diesem Fall muss sich der Haltebügel unten befinden und der Verstärkungsbügel aufgelegt sein, damit der Montagebügel eine ebene Unterseite zum Aufliegen auf der Tragekonstruktion besitzt.

Dies ist die im Folgenden in der gesamten Beschreibung weiter beschriebene Variante, ohne die Erfindung hierauf zu beschränken.

Jedoch ist eine solche ebene Unterseite des Montagebügels auch erreichbar, indem der Verstärkungsbügel der untere Bügel ist und die nach oben umgebogenen Biegelaschen aufweist, während der Haltebügel, der die Haltekröpfung für die Module besitzt, darauf auffliegt und die entsprechenden Aussparungen besitzt.

Vorzugsweise bestehen beide Bügel aus Metall.

Der Verstärkungsbügel besteht bevorzugt aus einem steiferen, und/oder dickeren, Material als der Haltebügel, und ist vorzugsweise auf der von dem Traggestell abgewandten Seite des Haltebügels angeordnet. Bevorzugt bestehen beide Bügel aus dem gleichen Werkstoff. Die beiden Bügel sollten auch gleich breit sein, was die Vorratshaltung und die Herstellung erleichtert.

Die Formschlussverbindung zwischen den beiden Bügeln ist vorzugsweise im Verschraubungsbereich angeordnet, insbesondere benachbart zu dessen freiem Ende. Dort ist die auftretende Biegebelastung am geringsten, sodass insbesondere die durch die Biegelaschen auftretende Materialschwächung an dieser Stelle keine Rolle spielt.

Die Formschlussverbindung, insbesondere die Biegelaschen, ist jeweils doppelt, symmetrisch zur Längsmitte des Haltebügels, angeordnet, um eine symmetrische Belastung des Bügels zu ergeben. Vorzugsweise handelt es sich bei den Biegelaschen um in Längsrichtung beabstandete erste und zweite Biegelaschen.

Die Biegelaschen sind dabei aus den in Längsrichtung verlaufenen Randbereichen des Bügels, insbesondere des Haltebügels, ausgestanzt und mit dem Rest dieses Bügels um eine insbesondere quer zur Längsrichtung des Bügels liegende Verbindungslinie verbunden und herumgebogen in Richtung der jeweils in Längsrichtung beabstandeten anderen Biegelasche. Von den herumgebogenen Enden kann das Material des anderen Bügels, insbesondere des Verstärkungsbügels, umschlossen werden.

Die in Verlaufsrichtung am freien Ende des Verschraubungsbereichs liegenden Biegelaschen können dabei auch direkt am freien Ende des Verschraubungsbereiches des Bügels enden.

Diese ersten Biegelaschen weisen also vorzugsweise mit Ihrem freien Ende von der doppelten Kröpfung weg und sind aus der Hauptebene des Bügels um **30° - 70°,** vorzugsweise um **40° - 50°,** nach oben gebogen.

Die zweiten Biegelaschen dagegen weisen vorzugsweise mit Ihrem freien Ende zur doppelten Kröpfung hin und sind aus der Hauptebene des Haltebügels zunächst um **80°** bis **100°,** insbesondere um ca. **90°**, nach oben gebogen.

Dadurch kann das Auflegen des zweiten Bügels, insbesondere des Verstärkungsbügels, auf einfache Weise und ohne allzu genaue Positionierung erfolgen, da ja nur die im **90°**-Winkel hochstehenden zweiten Biegelaschen eine Begrenzung in Längsrichtung darstellen, während die schräg hochstehenden ersten Biegelaschen beim Auflegen des Verstärkungsbügels sogar einen Zentrierungseffekt durch Ihre Schräge bewirken.

Nach dem Auflegen werden die zweiten Biegelaschen weiter umgebogen um insgesamt mindestens **180** ° um den angelegten Verstärkungsbügel herum, bis die Biegelasche zumindest mit Ihrem freien Ende auf der Oberseite des Verstärkungsbügels aufliegt.

Dabei liegen die Enden der umgebogenen zweiten Biegelaschen mit ihrem freien Ende lose oder mit so geringer Vorspannung auf der Oberseite des Verstärkungsbügels auf, dass eine Verschiebung in Längsrichtung zwischen den beiden Bügeln noch mittels Handkraft möglich ist, um bei der Montage noch eine geringfügige Ausrichtung der beiden Bügel zueinander zu ermöglichen.

Um eine gute Positionierung der beiden Bügel zueinander, trotz noch ausreichend einfacher Herstellung der Formschlussverbindung, zu erreichen, ist der freie Abstand zwischen den ersten Biegelaschen quer zur Längsrichtung höchstens um **0,5** mm, besser höchstens um **0,2** mm größer als die Breite des Verstärkungsbügels an dieser Stelle. Dabei sollte jedoch der freie Abstand zwischen den ersten Biegelaschen quer zur Längsrichtung mindestens **0,1** mm größer als die Breite des Verstärkungsbügels an dieser Stelle sein.

Aus dem gleichen Grund ist der freie Abstand zwischen den zweiten Biegelaschen quer zur Längsrichtung höchstens um **1,0** mm, besser um höchstens **0,5** mm als die Breite des Verstärkungsbügels an dieser Stelle. Dabei sollte, jedoch der freie Abstand zwischen den ersten Biegelaschen quer zur Längsrichtung mindestens **0,2** mm größer als die Breite des Verstärkungsbügels an dieser Stelle sein.

Die axiale Länge und Positionierung der Aussparung im Verstärkungsbügel für die Formschlussverbindung und die Aufnahme der zweiten Biegelaschen sind so gewählt, dass beim vollständigen Umbiegen der Biegelaschen bis herab auf die Oberfläche des Verstärkungsbügels diese zweiten Biegelaschen mit der Außenseite ihrer Biegung eventuell mit Vorspannung in Längsrichtung an der einen Flanke der Aussparung des Verstärkungsbügels anliegen.

Die Länge des freien Endes des Verstärkungsbügels im Haltebereich beeinflusst die Elastizität des gesamten Montagebügels stark. Vorzugsweise erstreckt sich das freie Ende des Verstärkungsbügels im Haltebereich über **20**% **- 60**%, besser zwischen **30**% **- 50**% der Länge des Schenkels des Haltebügels im Haltebereich bis zur Kröpfung an dessen freiem Ende.

Für die bessere Steuerung der Biegsamkeit kann der Biegewinkel der zweiten Kröpfung der doppelten Kröpfung beim Verstärkungsbügel geringfügig, insbesondere um **1° - 4°**, größer sein als beim Haltebügel, um zu erreichen, dass nach Verschrauben des Montagebügels auf dem Traggestell das freie Ende des Versstärkungsbügels immer mit Vorspannung auf dem Haltebügel aufliegt.

Im Verschraubungsbereich weist der Montagebügel in der Regel zwei Verschraubungsbohrungen in Längsrichtung zueinander beabstandet auf.

Vorzugsweise befindet sich die erste Verschraubungsbohrung möglichst nahe an der doppelten Kröpfung, während die zweite Verschraubungsbohrung sich nahe des freien Endes des Verschraubungsbereichs befindet, und zwar vorzugsweise in Längsrichtung zwischen den ersten und zweiten Biegelaschen.

Der vorstehend beschriebene Montagebügel kann durch folgendes Verfahren auf einfache Art und Weise hergestellt werden:
Zunächst werden für den Haltebügel und den Verstärkungsbügel jeweils ein Stück passender Länge von einem quasi endlosen Bandmaterial abgetrennt.

Dann werden bei den Bügeln sowohl die Verschraubungsbohrungen und beim einen Bügel die Biegelaschen und beim anderen Bügel die zur Aufnahme der Biegelaschen notwendigen Aussparungen ausgestanzt.

Anschließend werden die ersten Biegelaschen in die endgültige Lage hochgebogen und die zweiten Biegelaschen in eine Stellung von etwa **80**° - **100**° zur Hauptebene des Bügels.

In diesem Zustand können die beiden Bügel aufeinander gelegt werden, also vorzugsweise der Verstärkungsbügel auf den Haltebügel, welcher die Biegelaschen trägt, die sich dann durch die Aussparungen des Verstärkungsbügels hindurch erstrecken.

Anschließend können die zweiten Biegelaschen weiter umgebogen werden in die endgültige Position, sodass die zweiten Biegelaschen mit ihrem freien Ende auf der Oberseite des Verstärkungsbügels aufliegen. Vorzugsweise wird durch das Umbiegen der Verstärkungsbügel relativ zum Haltebügel in Längsrichtung beaufschlagt durch die Außenseite der Biegung der Biegelaschen, die gegen die eine Flanke der Aussparung drücken. Erst dann fluchten die Verschraubungsbohrungen der beiden Bügel zueinander.

Das Herstellen der doppelten gegenläufigen Kröpfungen kann nach der Verbindung der beiden Bügel durchgeführt werden, wird jedoch vorzugsweise vorher an den beiden Bügeln, also Haltebügel und Verstärkungsbügel, einzeln durchgeführt, zumal dadurch auch die Biegewinkel an der doppelten Kröpfung nicht bei beiden Bügeln gleich sein müssen.

Der beschriebene Vorgang kann weitgehend automatisiert werden, sodass auch das Auflegen der beiden Bügel aufeinander maschinell auf einfache Art und Weise durchgeführt werden kann, wegen der Führungsfunktion der um **90**° hochgestellten zweiten Biegelaschen und der Zentrierfunktion der schrägstehenden ersten Biegelaschen.

Durch diesen Aufbau des Montagebügels können auch unterschiedliche Montagebügel, insbesondere mit unterschiedlicher Elastizität, aus einem Baukasten geschaffen werden, der beispielsweise nur einen Haltebügel umfasst, aber unterschiedliche Verstärkungsbügel, die sich insbesondere hinsichtlich Ihrer Biegesteifigkeit im Haltebereich voneinander unterscheiden. Dadurch wird die Biegsamkeit im Haltebereich des gesamten Montagebügels beeinflusst und kann so auf unterschiedliche Werte eingestellt werden.

Eine einfache Möglichkeit zur Variation dieses Parameters besteht darin, die freie Länge des Schenkels des Verstärkungsbügels im Haltebereich unterschiedlich zu gestalten und/oder die Breite des Verstärkungsbügels.

Ebenso können Verstärkungsbügel mit unterschiedlicher Materialdicke, aus unterschiedlichen Materialien mit verschiedener Biegesteifigkeit, und mit unterschiedlicher Dicke verwendet werden, um trotz immer gleichen Haltebügels unterschiedliche fertige Montagebügel hinsichtlich vor allem der Elastizität in deren Haltebereich herzustellen.

Darüber hinaus können auch unterschiedliche Haltebügel verwendet werden, die beispielsweise entweder nur hinsichtlich der Materialstärke variieren und/oder auch in ihrer Breite variieren können, und/oder in der Anzahl ihrer Verschraubungsbohrungen, insbesondere der ersten Verschraubungsbohrungen nahe der doppelten Kröpfung, die natürlich immer mit der Anzahl und Position der Verschraubungsbohrungen im Verstärkungsbügel übereinstimmen müssen.

So kann beispielsweise die Verschraubungsbohrung, die nahe an der doppelten Kröpfung angeordnet ist und die größte Belastung aufzunehmen hat, doppelt, also in Querrichtung nebeneinander beabstandet, vorhanden sein, während die andere Verschraubungsbohrung nahe des freien Endes im Verschraubungsbereich eine sehr viel geringere Belastung aufzunehmen hat, sodass es hier oft ausreichend ist, trotz zweier erster Verschraubungsbohrungen an der Kröpfung nur eine Verschraubungsbohrung am freien Ende vorzusehen.

Deshalb kann in der Aufsicht betrachtet der Montagebügel in seinem Verschraubungsbereich zu seinem freien Ende hin auch schmaler werden, was Material spart.

Durch unterschiedlich gestaltete oder aus unterschiedlichem Materialen hergestellte Haltebügel und zu jeder Version des Haltebügels einen oder gar mehreren hinsichtlich der erwähnten Parameter unterschiedlichen Verstärkungsbügeln kann aus einem Baukasten mit nur wenigen unterschiedlichen Einzelteilen eine große Variationsbreite von Montagebügeln hergestellt werden.

### c) Ausführungsbeispiele

Ausführungsformen gemäß der Erfindung sind im Folgenden beispielhaft näher beschrieben. Es zeigen:
- Fig. **1**a, b:: die beiden Bügel vor dem Zusammensetzen perspektivisch und in der Seitenansicht,
- Fig. **2**:: die beiden Bügel zusammengefügt als Montagebügel in der Seitenansicht und
- Fig. **3**: ein Detail aus dem fertigen Montagebügel in der Seitenansicht.

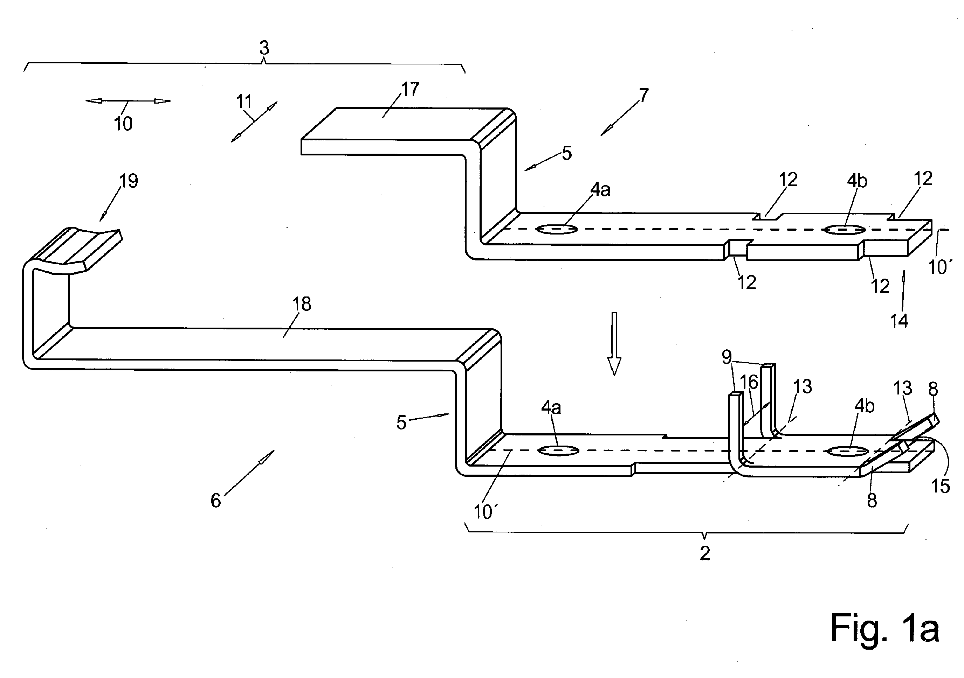

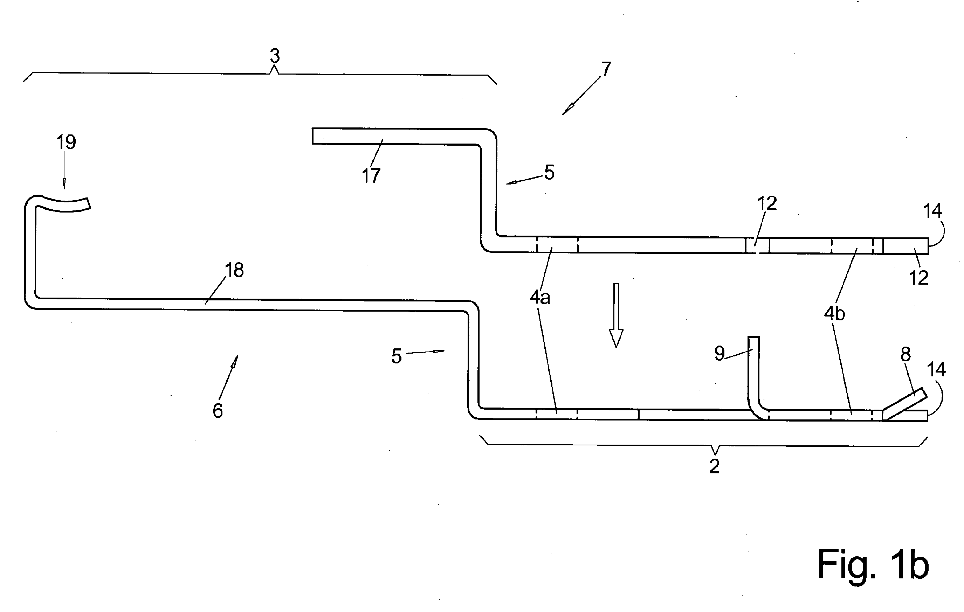

Die Figuren **1**a, b zeigen den Haltebügel **6** als auch den Verstärkungsbügel **7** jeweils einzeln und unmittelbar vor dem Zusammenfügen.

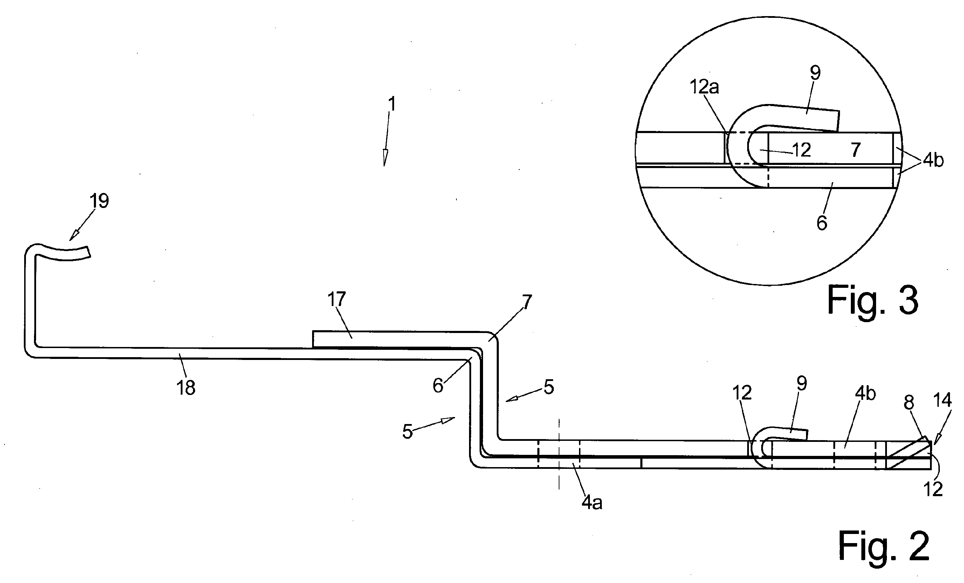

Beide Bügel **6**, **7** bestehen aus einem Flachmaterial, in aller Regel aus Metall, und weisen in ihrer Verlaufsrichtung **10** die analoge, gleiche doppelt-gegenläufige Kröpfung **5** auf, so dass nach dem Aufeinanderlegen der beiden Bügel **6**, **7**, wie in Figur **2** ersichtlich, die Schenkel beidseits die Kröpfungen **5** der beiden Bügel **6, 7** jeweils wieder, insbesondere kontaktierend, aneinander liegen.

In den Figuren ist der Bereich links von der Kröpfung **5** der Haltebereich **3**, der dadurch gekennzeichnet ist, dass der in diesem Bereich liegende Schenkel **18** des Haltebügels **6** eine U- förmige oder C- förmige Haltekröpfung **19** aufweist, von der der Rand des zu haltenden Gegenstandes, etwa eines Solar-Modules, umgriffen werden soll.

Der Bereich rechts der Kröpfung **5** ist der Verschraubungsbereich **2**, der zum einen der Verschraubung des fertigen Montagebügels **1** an einem darunter liegenden Tragegestell dient als auch der formschlüssigen Verbindung der beiden Bügel **6, 7** miteinander:
Die Verschraubung wird ermöglicht, indem in beiden Bügeln **6, 7** und im aufeinandergelegten Zustand fluchtend zueinander zwei Verschraubungs-Bohrungen **4**a, **4**b in Längsrichtung **10** zueinander beabstandet vorhanden sind, die jeweils auf der Längsmitte **10**' des Bügels **6,7** angeordnet sind. Die erste Verschraubungs-Bohrung **4**a ist dabei so nahe wie möglich an der Kröpfung **5** angeordnet, wie es das Auflegen eines Kopfes einer sich durch diese Bohrung erstreckenden Schraube noch zulässt.

Die andere Verschraubungs-Bohrung **4**b ist nahe am freien Ende **14** des Verschraubungsbereiches **2** angeordnet.

Die formschlüssige Verbindung der beiden Bügel **6, 7** wird erreicht, indem aus dem in diesem Fall unten liegenden Haltebügel **6** aus seinen Längsrändern des Schenkels im Verschraubungsbereich **2** zwei Paare von Biegelaschen **8**, **9** ausgestanzt und nach oben umgebogen sind:
Das erste Paar von Biegelaschen **8** ist am freien Ende **14** des Haltebügels **6** ausgestanzt, und die Biegelaschen sind an ihrem zu der Kröpfung **5** weisenden Ende mit dem Rest des Haltebügels **6** verbunden und um eine in Querrichtung **11** verlaufende Verbindungslinie **13** schräg nach oben gebogen.

Das andere Paar von Biegelaschen **9** ist etwa im mittleren Bereich des Haltebereiches **2** aus den seitlichen Rändern des Haltebügels ausgestanzt und mit seinem von der Kröpfung **5** wegweisenden Ende mit dem Rest des Haltebügels **6** verbunden und wiederum um eine in Querrichtung **11** verlaufende Verbindungslinie **13** nach oben gebogen, diesmal aber um etwa **90**° zur Hauptebene dieses Schenkels des Haltebügels **6.**

Die zweite Verschraubungs-Bohrung **4**b befindet sich in Längsrichtung **10** zwischen diesen beiden Paaren von Biegelaschen **8**, **9**.

An den Stellen, an denen sich die so hochgebogenen Biegelaschen **8, 9** des unteren Haltebügels **6** befinden, sind an dem oberen Verstärkungsbügel **7**, ebenfalls wiederum paarweise, in den Längsrändern Aussparungen **12** angeordnet, von denen das am freien Ende im Verschraubungsbereich **2** angeordnete Paar von Aussparungen **12** im freien Ende dieses Schenkels ausläuft.

Wie Figur **1**a gut erkennen lässt, kann nun der Verstärkungsbügel **7** von oben auf den Haltebügel **6** aufgelegt werden, wobei die vertikal nach oben aufragenden Biegelaschen **9** durch die in Längsrichtung **10** nur wenig längeren beiden mittleren Aussparungen **12** des Verstärkungsbügels **7** eingefädelt werden, und der freie Endbereich des Verstärkungsbügels **7** im Verschraubungsbereich **2** liegt zwischen den beiden schräg nach oben gebogenen Biegelaschen **8**.

Bereits dadurch sind die beiden Bügel **6, 7** sowohl in Längsrichtung **10** als auch in Querrichtung **11** grob zueinander positioniert, so dass auch die jeweiligen Verschraubungsbohrungen **4**a, b ebenfalls bereits grob übereinander liegen sollten.

Nunmehr werden die etwa vertikal nach oben stehenden Biegelaschen **9** weiter umgebogen, wie in Figur **2** und Figur **3** ersichtlich, bis das freie Ende dieser Biegelaschen **9** auf der Oberseite des Verstärkungsbügels **7** aufliegt.

Wie vor allem Figur **3** zeigt, drückt durch dieses weitere Umbiegen der Biegelaschen **9** deren gebogene Außenkontur gegen die zur Kröpfung **5** hin liegende Flanke **12**a der Aussparung **12**, wodurch eine exakte Positionierung in Längsrichtung **10** der beiden Bügel **6**,**7** zueinander erreicht wird, die in der Regel darin besteht, dass die Verschraubungs-Bohrungen **4**a, b zueinander fluchten und die beiden Bügel auch mit ihren doppeltgegenläufigen Kröpfungen **5** aneinanderliegen.

Die beiden Teile des auf diese Art und Weise hergestellten Montagebügels **1** bilden damit eine unverlierbare, einfach handhabbare Baugruppe.

### BEZUGSZEICHENLISTE

- **1**: Montagebügel
- **2**: Verschraubungsbereich
- **3**: Haltebereich
- **4**a, b: Verschraubung-Bohrung
- **5**: Doppelte Kröpfung
- **6**: Haltebügel
- **7**: Verstärkungsbügel
- **8**: Biegelasche
- **9**: Biegelasche
- **10**: Verlaufsrichtung
- **10**': Längsmitte
- **11**: Querrichtung
- **12**: Aussparungen
- **12a**: Flanke
- **13**: Verbindungslinie
- **14**: freies Ende
- **15**: Abstand
- **16**: Abstand
- **17**: freies Ende
- **18**: Schenkel
- **19**: Haltekröpfung

## Patentansprüche

1. Montagebügel (**1**) aus Flachmaterial, mit
- einem Verschraubungsbereich (**2**) mit wenigstens einer Verschraubungs-Bohrung (**4**a) zum Verschrauben an einer Tragkonstruktion,
- einem Haltebereich (**3**) zum Halten des zu fixierenden Gegenstandes,
- einer doppelt-gegenläufigen Kröpfung (**5**) zwischen diesen beiden Bereichen,
- der Montagebügel einen Haltebügel (**6**) sowie einen Verstärkungsbügel (**7**) umfasst, die
- beide die analoge, doppelt-gegenläufige Kröpfung (**5**) aufweisen,
- so aufeinanderliegen, dass die in beiden Bügeln (**6**, **7**) vorhandene je wenigstens eine Verschraubungs-Bohrung (**4**a) in den beiden Bügeln (**6**, **7**) zueinander fluchtet und
- eine Formschluss-Verbindung zwischen Haltebügel (**6**) und Verstärkungsbügel (**7**) aufweisen,
**dadurch gekennzeichnet, dass**
- Haltebügel (**6**) und Verstärkungsbügel (**7**) so kontaktierend aufeinanderliegen, dass die doppelt-gegenläufigen Kröpfungen (**5**) aneinander liegen.

2. Montagebügel nach Anspruch **1**,
**dadurch gekennzeichnet, dass**
die Formschluss-Verbindung Biegelaschen (**8**,**9**) umfasst, die in einem der Bügel (**6**, **7**), insbesondere im Haltebügel (**6**), angeordnet sind, und die sich aus dessen Hauptebene heraus, insbesondere nach oben, erstrecken und sich in Aussparungen (**12**) des anderen Bügels (**6**, **7**) insbesondere des Verstärkungsbügels (**7**), hinein erstrecken, wobei die beiden Bügel (**6**, **7**) insbesondere aus Metall bestehen.

3. Montagebügel nach einem der vorhergehenden Ansprüche,
**dadurch gekennzeichnet, dass**
der Verstärkungsbügel (**7**) eine größere Biegesteifigkeit, insbesondere um eine in Querrichtung (**11**) verlaufende Biegeachse quer zur Verlaufsrichtung (**10**), besitzt und insbesondere beide Bügel insbesondere aus dem gleichen Material bestehen und/oder gleich breit sind und der Verstärkungsbügel (**7**) eine größere Materialdicke besitzt als der Haltebügel (**6**).

4. Montagebügel nach einem der vorhergehenden Ansprüche,
**dadurch gekennzeichnet, dass**
die Formschluss-Verbindung, insbesondere die Biegelaschen (**8**, **9**), im Verschraubungsbereich (**2**) angeordnet sind, insbesondere benachbart zu dessen freiem Ende.

5. Montagebügel nach einem der vorhergehenden Ansprüche,
**dadurch gekennzeichnet, dass**
im Verschraubungsbereich (**2**) des Montagebügels mindestens zwei Verschraubung-Bohrungen (**4**a, b) in Verlaufsrichtung (**10**) beabstandet angeordnet sind und die Formschluss-Verbindung, insbesondere die Biegelaschen (**8**,**9**), von der näher an der doppelten Kröpfung (**5**) liegenden ersten Verschraubungsbohrung (**4**a) zurückversetzt in Richtung zweite Verschraubungsbohrung (**4**b) ist.

6. Montagebügel nach einem der vorhergehenden Ansprüche,
**dadurch gekennzeichnet, dass**
- bei in Längsrichtung (**10**) beabstandeten ersten und zweiten Biegelaschen (**8, 9**) die zweite Verschraubungsbohrung (**4**b) zwischen den ersten und zweiten Biegelaschen (**8**, **9**) angeordnet ist, und/oder
- die einzige Verschraubungsbohrung (**4**b) oder bei mehreren in Längsrichtung (**10**) beanstandeten Verschraubungsbohrungen (**4**a, b) die erste, näher an der doppelten Kröpfung (**5**) liegende Verschraubungsbohrung (**4**a) doppelt vorhanden ist, beabstandet zueinander quer zur Verlaufsrichtung (**10**) des Montagebügels (**1**).

7. Montagebügel nach einem der vorhergehenden Ansprüche,
**dadurch gekennzeichnet, dass**
- die Biegelaschen (**8**,**9**) jeweils doppelt, symmetrisch zur Längsmitte (**10**') des Haltebügels (**6**), angeordnet sind, und/oder
- die Biegelaschen (**8**,**9**) aus den in Längsrichtung (**10**) verlaufenden Randbereichen des Haltebügels (**6**) ausgestanzt sind und mit dem Rest des Haltebügels (**6**) um eine insbesondere quer zur Längsrichtung (**10**) des Haltebügels (**6**) liegende Verbindungslinie (**13**) verbunden und herum gebogen sind.

8. Montagebügel nach einem der vorhergehenden Ansprüche,
**dadurch gekennzeichnet, dass**
- bei den ersten Biegelaschen (**8**) die Verbindungslinie (**13**) an ihrem der doppelten Kröpfung zugewandten Ende angeordnet ist und die ersten Biegelaschen (**8**) aus der Hauptebene des Haltebügels (**6**) um **30**° - **70**°, vorzugsweise um **40**° - **50**°, gebogen sind in den Bereich des Verstärkungsbügels (**7**) hinein und insbesondere am freien Ende (**14**) des Verschraubungsbereiches (**2**) des Haltebügels (**6**) enden, und/oder
- die axiale Länge und Positionierung der Aussparungen (**12**) im Verstärkungsbügel (**7**) für die zweiten Biegelaschen (**9**) so gewählt ist, dass beim vollständigen Umbiegen der Biegelaschen (**9**) bis herab auf die Oberfläche des Verstärkungsbügels (**7**) die zweiten Biegelaschen (**9**) mit der Außenseite ihrer Biegung eventuell mit Vorspannung in Längsrichtung (**10**) an einer Flanke (**12**a) der Aussparung (**12**) des Verstärkungsbügels (**7**) anliegen.

9. Montagebügel nach einem der vorhergehenden Ansprüche,
**dadurch gekennzeichnet, dass**
- der freie Abstand (**15**) zwischen den ersten Biegelaschen (**8**) quer zur Längsrichtung (**10**) des Haltebügels (**6**) höchstens um **0,5** mm, besser höchstens um **0,2** mm, größer ist als die Breite des Verstärkungsbügels (**7**) an dieser Stelle, jedoch mindestens um **0,1** mm größer ist als die Breite des Verstärkungsbügels (**7**) an dieser Stelle, und/oder
- der freie Abstand (**16**) zwischen den zweiten Biegelaschen (**9**) quer zur Längsrichtung des Haltebügels (**6**) höchstens um **1,0** mm, besser höchstens um **0,5** mm, größer ist als die Breite des Verstärkungsbügels (7) an dieser Stelle, jedoch mindestens um **0,2** mm größer ist als die Breite des Verstärkungsbügels (**7**) an dieser Stelle.

10. Montagebügel nach einem der vorhergehenden Ansprüche,
**dadurch gekennzeichnet, dass**
- die zweiten Biegelaschen (**9**) die Verbindungslinie (**13**) an ihrem von der doppelten Kröpfung (**5**) abgewandten Ende aufweisen und im fertigen Zustand des Montagebügels (**1**) aus der Hauptebene des Haltebügels (**6**) um mindestens **180** ° umgebogen sind in den Bereich des Verstärkungsbügels (**7**) hinein und einen Bereich des Verstärkungsbügels (**7**) im Inneren ihrer Biegung aufnehmen, und/oder
- die zweiten Biegelaschen (**9**) mit ihrem freien Ende lose oder mit so geringer Vorspannung auf der Oberseite des Verstärkungsbügels (**7**) aufliegen, dass eine Verschiebung in Längsrichtung (**10**) zwischen Verstärkungsbügel (**7**) und Haltebügels (**6**) mittels Handkraft möglich ist.

11. Montagebügel nach einem der vorhergehenden Ansprüche,
**dadurch gekennzeichnet, dass**
- das freie Ende (**17**) des Verstärkungsbügels (**7**) im Haltebereich (**3**) sich über **20-60** %, besser zwischen **30** und **50** % der Länge des Schenkels (**18**) des Haltebügels (**6**) im Haltebereich (**3**) erstreckt, und/oder
- der Biegewinkel der zweiten Kröpfung, die in Richtung Haltebereich (**3**) weist, beim Verstärkungsbügel (**7**) geringfügig, insbesondere **1**° bis **4**°, größer ist als beim Haltebügel (**6**), so dass das freie Ende des Verstärkungsbügels (**7**) mit Vorspannung auf dem Haltebügel (**6**) aufliegt.

12. Verfahren zum Herstellen eines Montagebügels nach einem der Vorrichtungs-Ansprüche 1-11, mit folgenden Schritten:
- Ablängen von Haltebügel (**6**) und Verstärkungsbügel (**7**) von jeweils einem quasi-endlosen Bandmaterial,
- Ausstanzen der wenigstens einen Verschraubungsbohrung (**4**a) und Aussparungen (**12**) aus dem einen Bügel (**6**, **7**), insbesondere dem Verstärkungsbügel (**7**),
- Ausstanzen der wenigstens einen Verschraubungsbohrung (**4**a) und der Biegelaschen (**8**,**9**) aus dem einen Bügel (**6**, **7**), insbesondere dem Haltebügel (**6**),
- Hochbiegen der ersten Biegelaschen (**8**) in die endgültige Lage,
- Hochbiegen der zweiten Biegelaschen (**9**) in eine Stellung von **80**-**100°** zur Hauptebene des Bügels, insbesondere des Haltebügels (**6**),
- Anlegen des Verstärkungsbügels (**7**) an den Haltebügel (**6**), so dass sich die Biegelaschen (**8**,**9**) durch die entsprechenden Aussparungen (**12**) erstrecken,
- Umbiegen der zweiten Biegelaschen (**9**) in die endgültige Position.

13. Verfahren nach Anspruch **12**,
**gekennzeichnet durch**
Herstellen der doppelten Kröpfungen (**5**) an beiden Bügeln (**6**, **7**), insbesondere vor dem Auflegen des Verstärkungsbügels (**7**) auf den Haltebügel (**6**).

14. Verfahren nach Anspruch **12** oder **13**,
**dadurch gekennzeichnet, dass**
beim Umbiegen der zweiten Biegelaschen (**9**) in die endgültige Position der Verstärkungsbügel (**7**) relativ zum Haltebügel (**6**) in Längsrichtung (**10**) verschoben wird und insbesondere dadurch danach die Verschraubungsbohrungen (**4**a, b) der beiden Bügel zueinander fluchten.

15. Verfahren nach Anspruch **12**, **13** oder 14,
**dadurch gekennzeichnet, dass**
der anzulegende Verstärkungsbügel (**7**) aus einer Auswahl von unterschiedlichen Verstärkungsbügeln ausgewählt wird, deren Biegesteifigkeit im Haltebereich (**3**) unterschiedlich groß ist, insbesondere deren Länge und/oder deren Breite und oder deren Dicke im Haltebereich (**3**) unterschiedlich groß ist.

## Claims

1. A mounting bracket (1) made from flat material, comprising:
- a bolting portion (2) with at least one bolting bore hole (4a) for bolting to a support structure;
- a support portion (3) for supporting an object to be fixated;
- a double reverse elbow (5) between the two portions;
- wherein the mounting bracket includes a support bracket (6) and an reinforcement bracket (7) which;
- both include double reverse elbows (5),
- are placed on top of one another so that the at least one respective bolting bore hole (4a) provided in both brackets (6, 7) is aligned with the other in both brackets (6, 7) and
- include a form locking connection between support bracket (6) and reinforcement bracket (7),
**characterized in that**
- the support bracket (6) and the reinforcement bracket (7) contact one another and sit on top of one another, so that the double reverse elbows (5) contact one another.

2. The mounting bracket according to claim 1,
**characterized in that**
the form locking connection includes bending ears (8, 9) which are arranged in one of the bars (6, 7), in particular in the support bar (6) and extend from its main plane in particular upward and extend into recesses (12) of the other bracket (6, 7), in particular of the reinforcement bracket (7), wherein the two brackets (6, 7) are made in particular from metal.

3. The mounting bracket according to one of the preceding claims,
**characterized in that**
the reinforcement bracket (7) has greater bending stiffness in particular about a bending axis extending in transversal direction (11) transversal to its extension (10) and in particular both brackets are in particular made from the same material and/or have the same width and the reinforcement bracket (7) has a greater material thickness than the support bracket (6).

4. The mounting bracket according to one of the preceding claims,
**characterized in that**
the form locking connection, in particular the bending ears (8, 9) are arranged in the bolting portion (2), in particular adjacent to its free end mounting bracket

5. The mounting bracket according to one of the preceding claims,
**characterized in that**
at least two bolting bore holes (4a, b) are arranged in the bolting portion (2) of the mounting bracket offset along the extension (10) of the mounting bracket and the form
locking connection, in particular the bending ears (8, 9), is offset back in a direction of
the second bolting bore hole (4b) from the first bolting bore hole (4a) arranged more proximal to the double elbow (5).

6. The mounting bracket according to one of the preceding claims,
**characterized in that**
- for first bending ears and second bending ears (8, 9) offset in longitudinal direction (10), the second bolting bore hole (4b) is arranged between the first and the second bending ears (8, 9) and/or
- the only bolting bore hole (4b) or for plural bolting bore holes (4a, b) that are offset in longitudinal direction (10), the first bolting bore hole (4a) that is arranged more proximal to the double elbow (5) is provided twice and offset relative to one another transversal to the extension (10) of the mounting bracket (1).

7. The mounting bracket according to one of the preceding claims,
**characterized in that**
- the bending ears (8, 9) are respectively arranged in doubles symmetrical to the longitudinal center (10') of the support bracket (6) and/or
- the bending ears (8, 9) are punched out from edge portions of the support bracket (6) extending in longitudinal direction (10) and are connected with a remainder of the support bracket (6) about a connection line (13) arranged in particular transversal to the longitudinal direction (10) of the support bracket (6) and bent about the connection line (13).

8. The mounting bracket according to one of the preceding claims,
**characterized in that**
- in the first bending ears (8) the connection line (13) is arranged at its end oriented towards the double elbow and the first bending ears (8) are bent out of the main plane of the support bracket (6) by 30° to 70°, advantageously by 40° to 50° into a portion of the reinforcement bar (7) and terminate in particular at a free end (14) of the bolting portion (2) of the support bracket (6) and/or
- the axial length and positioning of the recesses (12) in the reinforcement bar (7) for the second bending ears (9) is selected so that the second bending ears (9) contact with an outside of their bend optionally with a preload in longitudinal direction (10) at a flank (12a) of the recess (12) of the reinforcement bracket (7) when completely bending the bending ears (9) down onto the surface of the reinforcement bracket (7).

9. The mounting bracket according to one of the preceding claims,
**characterized in that**
- a free distance (15) between the bending ears (8) transversal to the longitudinal direction (10) of the support bracket (6) is at the most 0.5 mm, better at the most 0.2 mm greater than the width of the reinforcement bracket (7) at this location, however at least 0.1 mm greater than the width of the reinforcement bracket (7) at this location, and/or
- a free distance (16) between the second bending ears (9) transversal to the longitudinal direction of the support bracket (6) is at the most 1.0 mm, better at the most 0.5 mm, greater than a width of the reinforcement bracket (7) at this location, however at least 0.2 mm greater than the width of the reinforcement bracket (7) at this location.

10. The mounting bracket according to one of the preceding claims,
**characterized in that**
- the second bending ears (9) include the connection line (13) at its end oriented away from the double elbow (5) and are bent at least by 180° in finished condition of the mounting bracket (1) out of the main plane of the support bracket (6) into a portion of the reinforcement bracket (7) and receive a portion of the reinforcement bracket (7) in an interior of their bend, and/or;
- the second bending ears (9) rest on a top side of the reinforcement bracket (7) loosely with their free ends or with a preload that is small enough so that a movement in longitudinal direction (10) between reinforcement bracket (7) and support bracket (6) is feasible by hand.

11. The mounting bracket according to one of the preceding claims,
**characterized in that**
- the free end (17) of the reinforcement bracket (7) in the support portion (3) extends over 20 - 60%, better between 30 and 50% of a length of the arm (18) of the support bracket (6) in the support portion (3), and/or
- the bending angle of the second elbow that is oriented towards the support portion (3) is slightly greater in the reinforcement bracket (7), in particular 1° to 4° than for the support bracket (6), so that the free end of the reinforcement bracket (7) rests on the support bracket (6) with a preload.

12. The method for producing a mounting bracket according to one of the device claims, 1 - 11 comprising the following steps:
- cutting the support bracket (6) and the reinforcement bracket (7) from a quasi endless band material,
- punching the at least one bolting bore hole (4a) and recesses (12) from one of the brackets (6, 7), in particular the reinforcement bracket (7),
- punching the at least one bolting bore hole (4a) and the bending ears (8, 9) from a first bracket (6, 7) in particular the support bracket (6),
- bending the first bending ears (8) up into their final positions,
- bending the second bending ears (9) up into a position of 80° to 100 ° relative to the main plane of the bracket, in particular of the support bracket (6),
- applying the reinforcement bracket (7) to the support bracket (6) so that the bending ears (8, 9) extend through the respective recesses (12)
- bending the second bending ears (9) into their final positions.

13. The method according to claim 12,
**characterized by**
producing the double elbows (5) at both brackets (6, 7), in particular before applying that reinforcement bracket (7) to the support bracket (6).

14. The method according to claim 12 or 13,
**characterized in that**
the reinforcement bracket (7) is moved relative to the support bracket (6) in longitudinal direction (10) when bending the second bending ears (9) into their final positions, and
in particular this subsequently puts the bolting bore hole (4a, b) of the two brackets into alignment with one another.

15. The method according to claim 12, 13 or 14,
**characterized in that**
the reinforcement bracket (7) to be applied is selected from a plurality of different reinforcement brackets whose bending stiffness in the support portion (3) differs, in particular their length and/or their width and/or their thickness in the support portion (3) differs.

## Revendications

1. Etrier de montage (1) en matériau plat, comprenant
- une zone de vissage (2) avec au moins un alésage de vissage (4a) pour le vissage sur une structure de support,
- une zone de retenue (3) pour maintenir l'objet à fixer,
- un coude double opposé (5) entre ces deux zones,
- l'étrier de montage comprenant un étrier de retenue (6) et un étrier de renfort (7), qui
- présentent réciproquement le coude analogue double opposé (5),
- reposent l'un contre l'autre de sorte que les alésages de vissage (4a) sont alignés dans les deux étriers (6, 7) et
- présentent une liaison par complémentarité de forme entre l'étrier de retenue (6) et l'étrier de renfort (7),
**caractérisé en ce que**
- l'étrier de retenue (6) et l'étrier de renfort (7) sont superposés en contact de sorte que les coudes doubles opposés (5) sont placés l'un contre l'autre.

2. Etrier de montage (1) selon la revendication 1, **caractérisé en ce que** la liaison par complémentarité de forme comprend des pattes de pliage (8, 9) qui sont disposées dans l'un des étriers (6, 7), en particulier dans l'étrier de retenue (6) et qui s'étendent hors de ce plan principal, en particulier vers le haut et pénètrent dans des évidements (12) de l'autre étrier (6, 7), en particulier de l'étrier de renfort (7), les deux étriers (6, 7) se composant en particulier de métal.

3. Etrier de montage selon l'une quelconque des revendications précédentes,
**caractérisé en ce que**
l'étrier de renfort (7) possède une plus grande rigidité à la flexion, en particulier autour d'un axe de flexion s'étendant dans la direction transversale (11) transversalement à la direction de défilement (10), et en particulier les deux étriers se composent du même matériau et/ou sont de largeur identique et l'étrier de renfort (7) présente une plus grande épaisseur de matériau que l'étrier de retenue (6).

4. Etrier de montage selon l'une quelconque des revendications précédentes,
**caractérisé en ce que**
la liaison par complémentarité de forme, en particulier, les pattes de pliage (8, 9), sont disposées dans la zone de vissage (2), en particulier, à proximité de leur extrémité libre.

5. Etrier de montage selon l'une quelconque des revendications précédentes,
**caractérisé en ce que**
dans la zone de vissage (2) de l'étrier de montage, au moins deux alésages de vissage (4a, b) sont disposés espacés dans la direction de défilement (10) et la liaison par complémentarité de forme, en particulier, les pattes de pliage (8, 9) sont décalées par rapport au premier alésage de vissage (4a) vers l'arrière dans la direction du second alésage de vissage (4b), le plus proche du coude double (5).

6. Etrier de montage selon l'une quelconque des revendications précédentes,
**caractérisé en ce que**
- dans le cas de premières et secondes pattes de pliage (8, 9) espacées dans la direction longitudinale (10), le second alésage de vissage (4b) est disposé entre les premières et secondes pattes de pliage (8, 9) et/ou
- l'unique alésage de vissage (4b) ou en cas de plusieurs alésages de vissage (4a, b) espacés dans la direction longitudinale (10), le premier alésage de vissage (4a) situé le plus près du coude double (5) est prévu en double, espacé transversalement à la direction de défilement (10) de l'étrier de montage (1).

7. Etrier de montage selon l'une quelconque des revendications précédentes,
**caractérisé en ce que**
- les pattes de pliage (8, 9) respectivement doubles sont disposées de façon symétrique à l'axe longitudinal (10') de l'étrier de retenue (6) et/ou
- les pattes de pliage (8, 9) sont découpées dans les zones de bord de l'étrier de retenue (6) s'étendant dans la direction longitudinale (10) et sont reliées et pliées avec le reste de l'étrier de retenue (6) autour d'une ligne de liaison (13) particulièrement transversalement à la direction longitudinale (10) de l'étrier de retenue (6).

8. Etrier de montage selon l'une quelconque des revendications précédentes
**caractérisé en ce que**
- pour les premières pattes de pliage (8), la ligne de liaison (13) est disposée sur leur extrémité tournée vers le coude double, et les premières pattes de pliage (8) sont pliées hors du plan principal de l'étrier de retenue (6) de 30° à 70°, de préférence de 40° à 50° (8) par rapport au plan principal de l'étrier de retenue (6) dans la zone de l'étrier de renfort (7) et se terminent en particulier à l'extrémité (14) de la zone de vissage (2) de l'étrier de renfort (2) d'extrémité de l'étrier de retenue (6), et/ou
- la longueur axiale et le positionnement des évidements (12) dans l'étrier de renfort (7) est choisie pour les deuxièmes pattes de pliage (9) de telle sorte que, quand les pattes de pliage (9) sont complétement reliées jusque sur la surface de l'étrier de renfort (7), les secondes languettes de pliage (9) s'appliquent par la face externe de leur courbure éventuellement avec précontrainte dans la direction longitudinale (10) contre un flanc (12a) de l'évidement (12) de l'étrier de renfort (7).

9. Etrier de montage selon l'une quelconque des revendications précédentes,
**caractérisé en ce que**
- l'espace libre (15) entre les premières pattes de pliage (8) transversalement à la direction longitudinale (10) de l'étrier de retenue (6) est plus large d'au moins 0,5 mm, de préférence au maximum de 0,2 mm, que la largeur de l'étrier de renfort (7) à cet endroit, cependant au moins plus large de 0,1 mm que la largeur de l'étrier de renfort (7) à cet endroit, et/ou
- l'espace libre (16) entre les secondes pattes de pliage (9) transversalement à la direction longitudinale (10) de l'étrier de retenue (6) est plus large d'au plus 1,0 mm, de préférence au maximum de 0,5 mm, que la largeur de l'étrier de renfort (7) à cet endroit, cependant au moins plus large d'0,2 mm que la largeur de l'étrier de renfort (7) à cet endroit.

10. Etrier de montage selon l'une quelconque des revendications précédentes
**caractérisé en ce que**
- les secondes pattes de flexion (9) présentent la ligne de liaison (13) sur leur extrémité détournée du coude double, sont pliées a l'état fini de l'étrier de montage ((1) du plan principal de l'étrier de montage (6) d'au moins 180° dans la zone de l'étrier de renfort (7) et logent une zone de l'étrier de renfort (7) à l'intérieur de leur courbure, et/ou
- les secondes pattes de pliage (9) s'appliquent sur la face supérieure de l'étrier de renfort (7) avec leur extrémité libre de manière libre ou avec une précontrainte si faible qu'un déplacement dans la direction longitudinale (10) est possible entre l'étrier de renfort(7) et l'étrier de retenue (6) par application manuelle.

11. Etrier de montage selon l'une quelconque des revendications précédentes
**caractérisé en ce que**
- l'extrémité libre (17) de l'étrier de renfort (7) s'étend dans la zone de retenue (3) sur 20 à 60%, de préférence entre 30 et 50% de la longueur de la branche (18) de l'étrier de retenue (6) dans la zone de retenue(3), et/ou
- l'angle de flexion du second coude dirigé en direction de la zone de retenue (3) est au niveau de l'étrier de renfort (7) légèrement, en particulier de 1 à 4° plus grand que le l'étrier de retenue(6) de sorte que l'extrémité libre de l'étrier de renfort (7) s'applique avec précontrainte contre l'étrier de retenue (6).

12. Procédé de fabrication d'un étrier de montage selon l'une des revendications précédentes 1 à 11, comprenant les étapes suivantes :
- sectionnement de l'étrier de retenue (6) et de l'étrier de renfort (7) dans au moins une bande de matériau sans fin,
- découpe d'au moins un alésage de vissage (4a) et d'évidement (12) dans un étrier (6, 7), en particulier de l'étrier de renfort (7),
- découpe d'au moins un alésage de vissage (a) et de pattes de pliage (8, 9) dans un étrier (6, 7) en particulier l'étrier de retenue (6),
- pliage vers le haut des premières pattes de pliage (8) dans la position définitive,
- pliage vers le haut des secondes pattes de pliage (9) dans une position de 80-100° par rapport au plan principal de l'étrier, en particulier de l'étrier de retenue (6),
- application de l'étrier de renfort (7) contre l'étrier de retenue (6) de sorte que les pattes de pliage (8, 9) s'étendent à travers les évidements correspondants (12),
- repli des secondes pattes de pliage (9) dans la position définitive.

13. Procédé selon la revendication 12,
**caractérisé par**
réalisation des coudes doubles (5) sur les deux étriers (6, 7), en particulier avant l'application de l'étrier de renfort (7) contre l'étrier de retenue (6).

14. Procédé selon la revendication 12 ou 13,
**caractérisé en ce que**
lors du repliement des secondes pattes de pliage (9), l'étrier de renfort (7) est déplacé dans la position définitive par rapport à l'étrier de retenue (6) dans la direction longitudinale (10) et en particulier les alésages de vissage (4a, b) des deux étriers sont de ce fait alignés.

15. Procédé selon la revendication 12, 13 ou 14,
**caractérisé en ce que**
l'étrier de renfort (7) à appliquer est sélectionné parmi différents étriers de renfort dont l'ampleur de la rigidité à la flexion est différente dans la zone de retenue (3), en particulier dont la longueur et/ou la largeur et ou l'épaisseur sont différentes dans la zone de retenue (3).
